(19) **Europäisches Patentamt**
**European Patent Office**
**Office européen des brevets**

(11) **EP 3 487 817 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **17735428.9**

(22) Anmeldetag: **26.06.2017**

(51) Internationale Patentklassifikation (IPC):
***C03B 27/04*** *(2006.01)* ***C03B 27/044*** *(2006.01)*

(52) Gemeinsame Patentklassifikation (CPC):
**C03B 27/044; C03B 27/0404**

(86) Internationale Anmeldenummer:
**PCT/EP2017/065663**

(87) Internationale Veröffentlichungsnummer:
**WO 2018/015108 (25.01.2018 Gazette 2018/04)**

(54) **DÜSENLEISTE FÜR EINEN BLASKASTEN ZUM THERMISCHEN VORSPANNEN VON GLASSCHEIBEN**

NOZZLE BAR FOR A BLOW BOX FOR TEMPERING PANES OF GLASS

RAMPE DE BUSES POUR CAISSON DE SOUFFLAGE DESTINÉ À LA TREMPE THERMIQUE DE FEUILLES DE VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2016 EP 16180585**

(43) Veröffentlichungstag der Anmeldung:
**29.05.2019 Patentblatt 2019/22**

(73) Patentinhaber: **Saint-Gobain Sekurit France**
**60150 Thourotte (FR)**

(72) Erfinder:
• **ZEICHNER, Achim**
**52134 Herzogenrath (DE)**
• **SCHILLINGS, Peter**
**52249 Eschweiler (DE)**
• **ULLRICH, Michael**
**52134 Herzogenrath (DE)**

(74) Vertreter: **Gebauer, Dieter Edmund**
**Splanemann Patentanwälte mbB**
**Rumfordstraße 7**
**80469 München (DE)**

(56) Entgegenhaltungen:
| | |
|---|---|
| EP-A1- 0 002 055 | EP-A1- 2 805 926 |
| EP-B1- 0 719 242 | WO-A1-03/101898 |
| WO-A1-2009/047450 | DE-A1- 102008 017 729 |
| DE-T2- 69 128 902 | DE-T2- 69 220 856 |
| GB-A- 505 188 | JP-A- 2009 274 884 |
| JP-B2- 5 445 974 | US-A- 2 194 760 |
| US-A- 4 494 972 | US-A- 4 662 926 |
| US-A- 4 749 401 | US-A- 5 522 912 |
| US-A1- 2008 127 678 | US-A1- 2011 020 611 |
| US-A1- 2013 255 319 | |

## Beschreibung

Die Erfindung betrifft eine Düsenleiste, einen damit ausgestatteten Blaskasten und eine diesen enthaltende Vorrichtung zum thermischen Vorspannen von Glasscheiben.

Das thermische Härten von Glasscheiben ist seit langem bekannt. Es wird häufig auch als thermisches Vorspannen oder Tempern bezeichnet. Lediglich beispielhaft sei auf die Patentdokumente DE 710690 A, DE 808880 B, DE 1056333 A aus den 1940er und 1950er Jahren verwiesen. Eine auf knapp unter Erweichungstemperatur erhitzte Glasscheibe wird dabei mit einem Luftstrom beaufschlagt, die zu einem raschen Abkühlen (Abschrecken) der Glasscheibe führt. Dadurch bildet sich in der Glasscheibe ein charakteristisches Spannungsprofil aus, wobei Druckspannungen an den Oberflächen und Zugspannungen im Kern der Glasscheibe vorherrschen. Dies hat auf zweierlei Weise Einfluss auf die mechanischen Eigenschaften der Glasscheibe. Erstens wird die Bruchstabilität der Scheibe gesteigert und sie kann höheren Belastungen widerstehen als eine ungehärtete Scheibe. Zweitens erfolgt ein Glasbruch nach Penetration der zentralen Zugspannungszone (etwa durch Beschädigung durch einen spitzen Stein oder durch absichtliches Zerstören mit einem spitzen Notfallhammer) nicht in Form großer scharfkantiger Scherben, sondern in Form kleiner, stumpfer Fragmente, wodurch die Verletzungsgefahr erheblich herabgesetzt wird.

Aufgrund der vorstehend beschriebenen Eigenschaften werden thermisch vorgespannte Glasscheiben als sogenanntes Einscheibensicherheitsglas im Fahrzeugbereich eingesetzt, insbesondere als Heckscheiben und Seitenscheiben. Insbesondere im Falle von Personenkraftwagen sind die Scheiben typischerweise gebogen. Das Biegen und Vorspannen erfolgt dabei kombiniert: die Scheibe wird durch Erhitzen erweicht, in die gewünschte gebogene Form gebracht und anschließend mit dem abkühlenden Luftstrom beaufschlagt, wobei die Vorspannung erzeugt wird. Hierbei kommen sogenannte Blaskästen *(quench box, quench head)* zum Einsatz, denen durch starke Ventilatoren der Luftstrom zugeleitet wird. Im Blaskasten wird der Luftstrom in verschiedene Kanäle aufgeteilt, die jeweils mit einer Düsenleiste abgeschlossen sind. Die Düsenleisten weisen eine Seitenfläche mit einer Reihe von Blasöffnungen oder Düsenöffnungen auf, die auf die Glasscheibe gerichtet sind und diese mit dem mittels des Blaskasten verteilten Luftstrom beaufschlagen. Die gebogene Glasscheibe wird typischerweise zwischen einen oberen und einen unteren Blaskasten gefahren, die Blaskästen dann einander und den Scheibenoberflächen zum Vorspannen angenähert. Die Gesamtvorrichtung mit den beiden Blaskästen wird häufig als Vorspannstation bezeichnet.

Die besagten Seitenflächen allgemein gebräuchlicher Düsenleisten sind insgesamt plan oder gekrümmt-flächig ausgebildet, die Düsenleisten weisen eine im Wesentlichen quaderförmige Form oder die Form eines gebogenen Quaders auf. Die Düsenleisten bilden daher gleichsam Barrieren für abfließende Luft, sodass diese vornehmlich nur zwischen den Düsenleisten, also parallel zur Erstreckungsrichtung der Düsenleisten effizient abfließen kann, nicht aber quer zu den Düsenleisten. Insbesondere beim Vorspannen stark dreidimensional (sphärisch) gebogener Scheiben kann dies erhebliche Nachteile mit sich bringen. Die konkave Oberfläche einer solchen stark gebogenen Scheibe bildet eine Art Kessel aus, wodurch der Abfluss der erwärmten Luft in der einzig verbliebene Abflussrichtung eventuell behindert wird. So kann es zu einem Luftstau kommen, welcher die Abkühlung der Scheibenoberfläche behindert und damit die Vorspanneffizienz herabsetzt.

Blaskästen mit Düsenleisten der vorstehend beschriebenen Art sind beispielsweise in DE 3612720 C2, DE 3924402 C1 und WO 2016054482 A1 offenbart.

Es sind auch andere Arten von Blaskästen oder Vorspannvorrichtungen bekannt, bei denen der Luftstrom nicht in Kanäle aufgeteilt wird, die durch Düsenleisten abgeschlossen sind. Der Blaskasten kann beispielsweise einen Hohlraum aufweisen, der durch eine Platte abgeschlossen ist, welche in der Art eines zweidimensionalen Musters mit Öffnungen (Düsen) versehen ist, wodurch der Luftstrom aufgeteilt und über die vorzuspannende Glasscheibe verteilt wird.

Um die Vorspanneffizienz zu erhöhen, ist es wünschenswert, ein schnelleres Abfließen der erwärmten Luft zu ermöglichen. Durch eine höhere Vorspanneffizienz können höhere Spannungen erzeugt werden oder ein gegebenes Spannungsprofil energiesparender erzeugt werden.

Es sind auch Blaskästen bekannt, die mit aufgesetzten, beispielsweise angeschraubten freistehenden Düsen versehen sind. Solche Düsen sind sowohl für Blaskästen beschrieben worden, deren Hohlraum durch eine Düsenplatte abgeschlossen ist, als auch für solche, bei denen der Gasstrom in Kanäle aufgeteilt wird, die durch eine Düsenleiste abgeschlossen sind. Es sei beispielhaft auf US 4519829 A, US 4711655 A, EP 0463971 A2, GB 505 188 A, US 2013/255319 A1, US 4 662 926 A, EP 0 719 242 B1 und EP 0 002 055 A1 verwiesen. Solche Düsenleisten ermöglichen prinzipiell ein schnelleres Abkühlen, weil durch die Zwischenräume zwischen den Düsen weitere Abflusskanäle auch quer zur Erstreckungsrichtung der Düsenleisten eröffnet werden. Die mehrstückige Ausbildung von Düsenleisten und aufgesetzten Düsen erschwert aber die Herstellung und setzt die mechanische Stabilität des Blaskastensystems herab.

WO 03/101898 A1, JP 5445974 B2, US 4494972 A, EP 2805926 A1, DE 102008017729 A1, US 2008/127678 A1, US 4749401 A, JP 200927488 A und US 2194760 A zeigen jeweils Vorrichtungen, bei denen ein Gegenstand durch eine Blaseinrichtung angeblasen wird.

Der vorliegenden Erfindung liegt die Aufgabe zugrunde, eine verbesserte Düsenleiste für Blaskästen zum thermischen Vorspannen von Glasscheiben bereitzustellen. Die Düsenleiste soll eine verbesserte Vorspanneffizienz ermöglichen, insbesondere beim Vorspannen stark dreidimensional gebogener Scheiben, eine hohe mechanische Stabilität aufweisen und einfach herzustellen sein.

Die Aufgabe wird erfindungsgemäß gelöst durch eine Düsenleiste gemäß dem unabhängigen Anspruch 1. Bevorzugte Ausgestaltungen gehen aus den abhängigen Ansprüchen hervor.

Die erfindungsgemäße Düsenleiste für einen Blaskasten zum thermischen Vorspannen von Glasscheiben weist eine mit einer Reihe von Düsenöffnungen versehene Seitenfläche auf, die zum Beaufschlagen einer Oberfläche einer Glasscheibe mit einem Luftstrom durch die Düsenöffnungen vorgesehen sind. Die Düsenöffnungen können auch als Blasöffnungen oder Düsenaustritte bezeichnet werden. Sie sind jeweils das Ende einer sich durch die gesamte Düsenleiste erstreckenden Durchführung oder Bohrung, die als Düse bezeichnet wird und durch welche ein Gas von einem Gaskanal (Luftkanal) des Blaskastens auf die Scheibenoberfläche geleitet wird. Die Düsenöffnung ist die Ausgangsöffnung der Durchführung (Düse), während üblicherweise an der gegenüberliegenden Seitenfläche die Eingangsöffnung (Düseneintritt) ausgebildet ist. Typischerweise weist eine solche Düse einen sich an die Eingangsöffnung anschließenden und sich in Richtung zur Ausgangsöffnung verjüngenden Abschnitt auf, um die Luft effizient und strömungstechnisch günstig vom Luftkanal in die jeweilige Düse zu leiten.

Gegenüber den herkömmlichen Düsenleisten mit glatter Seitenfläche ist die erfindungsgemäße Düsenleiste dadurch vorteilhaft weitergebildet, dass die Düsenöffnungen auf zinnenartigen Erhebungen der Seitenfläche angeordnet sind.

Alternativ kann die erfindungsgemäße Düsenleiste gegenüber herkömmlichen Düsenleisten als dadurch vorteilhaft weitergebildet aufgefasst werden, dass ein Bereich der Seitenfläche zwischen jeweils benachbarten Düsenöffnungen zurückgesetzt ist.

Die Düsenleiste ist also mit Zinnen und dazwischenliegenden Zinnenfenstern (das heißt Lücken zwischen den Zinnen) ausgebildet. Die Düsenöffnungen sind auf der Oberseite der Zinnen angeordnet. Die Zinnenfenster stellen zusätzliche Abflusskanäle bereit, sodass die nach dem Aufblasen auf die Scheibenoberfläche erwärmte Luft auch quer zur Erstreckungsrichtung der Düsenleisten abfließen kann, wodurch die Vorspanneffizienz verbessert wird. Das ist ein großer Vorteil der vorliegenden Erfindung.

Ein weiterer Vorteil der Erfindung tritt dann zutage, wenn eine starke Annäherung der Düsenleiste an die Glasscheibe gewünscht ist, beispielsweise zur Erhöhung der Vorspanneffizienz. Dabei besteht die Gefahr, dass die Düsenleiste mit der Scheibe oder der Vorspannform, auf der die Scheibe angeordnet ist, kollidiert. Bei der erfindungsgemäßen Düsenleiste werden die Kollisionsstellen auf den vorstehenden zinnenartigen Erhebungen angeordnet sein, welche leicht durch Materialabtrag zu verkürzen sind, um die Kollision zu vermeiden.

Die erfindungsgemäße Düsenleiste kann auch als Düsenleiste mit auf einer Seitenfläche angeordneten, sich erhebenden oder vorstehenden, freistehenden Düsen aufgefasst werden, welche gegenüber den bekannten dadurch weitergebildet ist, dass die Düsen mit der Düsenleiste einstückig ausgebildet sind. Dadurch wird eine große mechanische Stabilität der Düsenleiste gewährleistet und die Düsenleiste lässt sich einfacher herstellen als im Falle von eigens angeschraubten Düsen.

Die Düsenleiste weist bevorzugt eine einzige Reihe von Düsenöffnungen auf, die im Wesentlichen entlang einer Linie angeordnet sind. Die zinnenartigen Erhebungen sind entlang derselben Linie angeordnet. Auf jeder zinnenartigen Erhebung der Seitenfläche der Düsenleiste ist bevorzugt genau eine Düsenöffnung angeordnet, typischerweise im Wesentlichen mittig. Die Reihe von Düsenöffnungen erstreckt sich bevorzugt über mindestens 80% der Länge der Düsenleiste.

Die Düsenöffnungen weisen bevorzugt einen Durchmesser von 4 mm bis 15 mm, besonders bevorzugt von 5 mm bis 10 mm, ganz besonders bevorzugt von 6 mm bis 8 mm auf, beispielsweise 6 mm oder 8 mm. Der Abstand benachbarter Düsenöffnungen beträgt bevorzugt von 10 mm bis 50 mm, besonders bevorzugt von 20 mm bis 40 mm, beispielsweise 30 mm. Damit werden gute Vorspannergebnisse erzielt. Mit Abstand wird hier der Abstand zwischen den jeweiligen Mittelpunkten der Düsenöffnungen bezeichnet.

Die Höhe der zinnenartigen Erhebungen beträgt bevorzugt mindestens 10 mm, besonders bevorzugt mindestens 30 mm. Die Höhe beträgt bevorzugt von 10 mm bis 150 mm, besonders bevorzugt von 30 mm bis 100 mm, beispielsweise 40 mm oder 60. Damit wird ein wirksames Abfließen erwärmter Luft zwischen den Zinnen und gleichzeitig eine ausreichende Stabilität der Düsen gewährleistet. Mit Höhe der zinnenartigen Erhebung wird im Sinne der Erfindung die Dimension entlang der Erstreckungsrichtung der Düse bezeichnet.

Bei der Wahl der Breite der Erhebungen sollte der Durchmesser der Düsenöffnungen berücksichtigt werden, sodass eine ausreichende Wandstärke der Düsen gewährleistet ist. Die Wandstärke sollte mindestens 1,5 mm betragen, damit eine ausreichende Stabilität der Erhebung erreicht wird. Folglich hat die Breite der zinnenartigen Erhebungen bevorzugt einen Wert, der dem Durchmesser der Düsenöffnung zuzüglich 3 mm entspricht. Die Breite der zinnenartigen Erhebung beträgt beispielsweise von 10 mm bis 30 mm oder auch von 12 mm bis 22 mm. Mit Breite der zinnenartigen Erhebung wird im Sinne der Erfindung die Dimension entlang der Erstreckungsrichtung der Düsenreihe (Aneinanderreihung von Düsenöffnungen) bezeichnet.

Der Abstand benachbarter zinnenartiger Erhebungen beträgt bevorzugt mindestens 5 mm, besonders bevorzugt mindestens 10 mm. Der Abstand beträgt bevorzugt von 5 mm bis 30 mm, besonders bevorzugt von 10 mm bis 20 mm. Damit wird ein effizienter Abfluss erwärmter Luft gewährleistet. Hierbei ist der Abstand zwischen den einander zugewandten Seitenkanten der Zinnen gemeint. Der Abstand entspricht also gleichsam der Breite der Zinnenfenster.

Die Tiefe der zinnenartigen Erhebung entspricht bevorzugt der Breite beziehungsweise Tiefe der Düsenleiste, kann grundsätzlich aber auch größer oder kleiner gewählt werden. Ebenso wie die Breite ist bei der Tiefe der Erhebungen die Mindestwandstärke zu berücksichtigen. Die Tiefe der zinnenartigen Erhebungen hat bevorzugt einen Wert, der dem Durchmesser der Düsenöffnung zuzüglich 3 mm entspricht. Die Tiefe ist die Dimension senkrecht zur erfindungsgemäß definierten Höhe und Breite der Zinnen.

Die Länge und Breite der Düsenleiste richtet sich nach der Gestaltung des Blaskastens beziehungsweise dessen Gaskanäle, für den die Düsenleiste vorgesehen ist. Typische Werte für die Länge der Düsenleiste (gemessen entlang der Erstreckungsrichtung der Düsenreihe) betragen von 70 cm bis 150 cm und für die Breite/Tiefe (gemessen senkrecht zur Länge in der Ebene der Düsenöffnungen) von 8 cm bis 15 cm, bevorzugt von 10 bis 12mm. Die Anzahl der Düsenöffnungen ergibt sich aus der Länge der Düsenleiste und dem gegenseitigen Abstand der Düsen.

Die einzelnen zinnenartigen Erhebungen haben in einer bevorzugten Ausgestaltung eine im Wesentlichen quaderförmige Form, wobei die Ecken und Kanten aus fertigungstechnischen Gründen oder aufgrund bewusster Gestaltung abgerundet sein können. Eine solche Form ist einfach herzustellen und stabil. Grundsätzlich können aber auch andere Formen realisiert werden, beispielsweise die Form eines Kreiszylinders oder eines Kegel- oder Pyramidenstumpfs.

Erfindungsgemäß sind die zinnenartigen Erhebungen zumindest gekrümmt ausgeformt und weisen keine geraden Abschnitte auf, sodass sich in Seitenansicht eine Art Wellenprofil ergibt. Die Düsenöffnungen sind auf den Wellenbergen, genauer gesagt den Wellenkämmen, angeordnet, während die Zinnenfenster im Wesentlichen durch die Wellentäler definiert werden. Anders ausgedrückt ist die Fläche der Düsenleiste mit den Düsenöffnungen gekrümmt ausgebildet und weist keine planen Abschnitte oder Teilflächen auf. Diese Form der zinnenartigen Erhebungen ist einfach herzustellen und vermeidet das Auftreten von Kanten in den Zinnenfenstern, in denen sich Glassplitter von beschädigten oder gebrochenen Glasscheiben verkanten oder verhaken können. Die Reinigung der Düsenleisten nach Glasbruch wird dadurch erheblich vereinfacht. Als Höhe der zinnenartigen Erhebung wird in diesem Fall der Abstand zwischen der Verbindungslinie der Wellenlänge und der Verbindungslinie der tiefsten Punkte der Wellentäler angegeben. Die Breite der Zinnen und der Abstand der Zinnen kann näherungsweise auf halber Zinnenhöhe gemessen werden. Die beschriebene Form der Düsenleiste sollte zumindest abschnittsweise/bereichsweise auftreten, wobei dieser Abschnitt/Bereich bevorzugt mindestens 80 % der Düsenleiste entspricht. Idealerweise ist im Wesentlichen die gesamte Düsenleiste in der gekrümmten Form ausgestaltet, wobei die beiden endständigen Zinnen Ausnahmen bilden können, beispielsweise wenn die Seitenflächen der endständigen Zinnen, die von den übrigen Zinnen abgewandt sind, aus fertigungstechnischen Gründen plan ausgebildet sind.

Die Düsenleiste enthält bevorzugt Aluminium oder Stahl und ist bevorzugt aus den besagten Materialen gefertigt. Diese Materialien sind gut zu bearbeiten, sodass die Düsenleiste vorteilhaft hergestellt werden kann, und bedingen eine vorteilhafte Stabilität der Düsenleiste im Langzeiteinsatz.

Die Herstellung der Düsenleiste kann ausgehend von einem quaderförmigen Werkstück oder einem Werkstück in Form eines gebogenen Quaders erfolgen. An einer Seitenkante wird durch Materialabtrag die zinnenartige Struktur ausgebildet. An der gegenüberliegenden Seitenkante können durch Materialabtrag Vertiefungen gebildet werden, bevorzugt mittels eines Senkers, insbesondere Kegelsenkers, welche die sich verjüngenden Abschnitte der Düsen ergeben. Vor, nach oder zwischen den beschriebenen Arbeitsschritten können die Düsen durch Bohrungen ausgebildet werden. Der Düseneintritt, der Übergang zwischen den sich verjüngenden Vertiefungen und der Bohrung oder die Düsenöffnung können entgratet werden, um ein verbessertes Strömungsprofil zu ermöglichen. Der Materialabtrag erfolgt bevorzugt durch Laserschnitt oder Wasserstrahlschneiden.

Die Erfindung umfasst außerdem einen Blaskasten, ausgestattet mit mindestens einer erfindungsgemäßen Düsenleiste. Der Blaskasten dient zum Beaufschlagen der Oberfläche einer Glasscheibe zum thermischen Vorspannen. Der Blaskasten ist eine Vorrichtung mit einem inneren Hohlraum und weist eine Gaszuleitung auf, über die ein Gasstrom in das Innere des Blaskastens eingeleitet werden kann. Der Gasstrom wird typischerweise mittels eines Ventilators oder mehrerer in Reihe geschalteter Ventilatoren erzeugt. Bevorzugt ist die Gaszuleitung beispielsweise mittel eines Schiebers oder einer Klappe verschließbar, sodass der Gasstrom in den inneren Hohlraum unterbrochen werden kann, ohne die Ventilatoren selbst auszuschalten.

Der Gaszuleitung gegenüberliegend schließen sich an den inneren Hohlraum eine Mehrzahl von Kanälen an, in die der Gasstrom im Betrieb aufgeteilt wird. Die Kanäle können auch als Düsenstege, -finnen oder -rippen bezeichnet werden. Die Kanäle weisen typischerweise einen länglichen, im Wesentlichen rechteckigen Querschnitt auf, wobei die längere Dimension im Wesentlichen der Breite des Hohlraums entspricht und die kürzere Dimension im Bereich von 8 cm bis 15 cm liegt. Typischerweise sind die Kanäle parallel zueinander angeordnet, sodass sie gleichmäßig über die gesamte Seitenbegrenzung des Hohlraums verteilt sind. Die Anzahl der Kanäle beträgt typischerweise von 10 bis 50.

Der innere Hohlraum ist in einer bevorzugten Ausgestaltung keilartig ausgebildet. Die an die Kanäle grenzende Begrenzung des Hohlraums kann dabei beschrieben werden als zwei Seitenflächen, die unter einem spitzen Winkel zusammenlaufen. Die Kanäle verlaufen typischerweise senkrecht zur Verbindungslinie besagter Seitenfläche. Folglich ist die Länge eines Kanals nicht konstant, sondern nimmt von der Mitte zu den Seiten hin zu, sodass die an den Hohlraum angeschlossene Eintrittsöffnung des Kanals keilförmig ist und die Austrittsöffnung eine glatte, typischerweise gekrümmte Fläche aufspannt. Die Austrittsöffnungen sämtlicher Kanäle bildet typischerweise eine gemeinsame glatte, gekrümmte Fläche aus. Durch die beschriebene keilförmige Ausgestaltung des Hohlraums und die beschriebene Anordnung der Kanäle wird der Gasstrom besonders effizient in die Kanäle aufgeteilt und es resultiert eine über die gesamte Wirkfläche sehr homogener Gasstrom.

Jeder Kanal ist an seinem dem Hohlraum gegenüberliegenden Ende mit einer Düsenleiste abgeschlossen. Die Düsenleiste weist eine Mehrzahl von Durchführungen auf, die als Düsen bezeichnet werden und durch die der Gasstrom jedes Kanals wiederum aufgeteilt ist. Zumindest einer der Kanäle, bevorzugt sämtliche Kanäle, sind mit einer erfindungsgemäßen Düsenleiste mit zinnenartigen Erhebungen ausgestattet.

Die Kanäle sind typischerweise durch Bleche ausgebildet und durch die Düsenleiste abgeschlossen. Die seitlichen Bleche weisen bevorzugt am Kanalausgang eine gerade Seitenkante auf. Der Kanal ist durch den unteren Teil der Düsenleiste, der Seitenfläche mit den Düsenaustritten auf den zinnenartigen Erhebungen gegenüberliegend, abgeschlossen. Die Bleche sind nicht bis zur den zinnenartigen Erhebungen hochgezogen. Solche Bleche sind einfacher und mit geringerem Materialaufwand herzustellen. Außerdem wird durch die Tatsache, dass im Zwischenraum zwischen den zinnenartigen Erhebungen benachbarter Düsenleisten kein Blech angeordnet ist, der Freiraum für abströmendes Gas vergrößert.

Die Düsenleisten sind bevorzugt so ausgebildet und angebracht, dass die zinnenartigen Erhebungen benachbarter Düsenleisten versetzt angeordnet sind. Jede Erhebung ist also benachbart zu den "Zinnenfenstern" der beiden benachbarten Düsenleisten angeordnet.

Der Blaskasten teilt also den Gasstrom aus der Gaszuleitung mit vergleichsweise geringem Querschnitt über die Kanäle und Düsen auf eine große Wirkfläche auf. Die Düsenöffnungen stellen diskrete Gasaustrittsstellen dar, die jedoch in großer Anzahl vorliegen und gleichmäßig verteilt sein können, sodass alle Bereiche der Oberfläche im Wesentlichen zeitgleich und gleichmäßig abgekühlt werden, sodass die Scheibe mit einer homogenen Vorspannung versehen wird.

Mindestens eine Düsenleiste des erfindungsgemäßen Blaskastens ist eine erfindungsgemäße Düsenleiste mit den zinnenartigen Erhebungen. Bevorzugt ist die Mehrzahl der Düsenleisten erfindungsgemäß ausgebildet, besonders bevorzugt sämtliche Düsenleisten. Dann treten die Vorteile besonders zu Tage.

Der Abstand benachbarter Düsenleisten (gemessen von der jeweiligen Mitte aus) beträgt bevorzugt von 15 mm bis 50 mm.

Die Erfindung umfasst außerdem eine Vorrichtung zum thermischen Vorspannen von Glasscheiben. Die Vorrichtung umfasst einen ersten Blaskasten und einen zweiten Blaskasten, die einander gegenüberliegend angeordnet sind, sodass ihre Düsen aufeinander weisen. Die Blaskästen sind voneinander beabstandet, sodass eine Glasscheibe zwischen ihnen angeordnet werden kann. Typischerweise weisen die Düsen des ersten Blaskastens (oberer Blaskasten) nach unten, insbesondere lotrecht nach unten, und die Düsen des zweiten Blaskastens (unterer Blaskasten) nach oben, insbesondere lotrecht nach oben. Dann kann eine Glasscheibe vorteilhafterweise horizontal liegend zwischen die Blaskästen bewegt werden.

Die Vorrichtung umfasst bevorzugt außerdem Mittel zur Änderung des Abstands zwischen erstem und zweitem Blaskasten. Dadurch können die Blaskästen relativ aufeinander zu und voneinander weg bewegt werden. Bevorzugt werden beide Blaskästen simultan aufeinander zu beziehungsweise voneinander weg bewegt. Durch die bewegbaren Blaskästen kann die Vorspanneffizienz gesteigert werden. Nachdem die Glasscheibe im weiter beabstandeten Zustand der Blaskästen zwischen diese eingefahren worden ist, wird der Abstand der Blaskästen zueinander und damit zur Glasscheibe verringert, wodurch ein stärkerer Gasstrom auf der Glasoberfläche erzeugt werden kann.

Die Vorrichtung umfasst außerdem Mittel zur Bewegung einer Glasscheibe, die dazu geeignet sind, eine Glasscheibe in den Zwischenraum zwischen den beiden Blaskästen zu bewegen und aus besagtem Zwischenraum wieder heraus. Hierzu kann beispielsweise ein Schienen-, Rollen- oder Laufbandsystem verwendet werden. Die Glasscheibe kann beim Transport optional auf einer Rahmenform gelagert sein.

Die Gestaltung der Blaskästen und ihrer Gaskanäle und Düsenleisten ist bevorzugt auf die Form der vorzuspannenden Scheibe angepasst. Die Düsenöffnungen eines Blaskastens spannen dabei eine konvex gekrümmte Fläche auf und die Düsenöffnungen des gegenüberliegenden Blaskastens eine konkav gekrümmte Fläche. Die Stärke der Krümmung richtet sich ebenfalls nach der Scheibenform. Beim Vorspannen wird der konvexe Blaskasten der konkaven Oberfläche der Scheibe zugewandt und der konkave Blaskaste der konvexen Oberfläche. So können die Düsenöffnung näher an der Glasoberfläche positioniert werden, was die Vorspanneffizienz erhöht. Da die Scheiben üblicherweise mit nach oben weisender konkaver Oberfläche zur Vorspannstation transportiert werden, ist der obere Blaskasten bevorzugt konvex und der untere konkav ausgestaltet.

Gezeigt, aber in den Patentansprüchen nicht beansprucht ist, eine Anordnung zum thermischen Vorspannen von Glasscheiben, umfassend die erfindungsgemäße Vorrichtung und eine zwischen den beiden Blaskästen angeordnete Glasscheibe.

Gezeigt, aber in den Patentansprüchen nicht beansprucht ist, außerdem ein Verfahren zum thermischen Vorspannen von Glasscheiben, wobei

(a) eine erhitzte, vorzuspannende Glasscheibe, die zwei Hauptflächen und eine umlaufende Seitenkante aufweist, flächig zwischen einem ersten Blaskasten und einem zweiten Blaskasten angeordnet wird, sodass die beiden Hauptflächen mit einem Gasstrom beaufschlagt werden können, wobei der erste Blaskasten und/oder der zweite Blaskasten mit mindestens einer erfindungsgemäßen Düsenleiste ausgestattet ist;
(b) die beiden Hauptflächen der Glasscheibe mittels der beiden Blaskästen mit einem Gasstrom beaufschlagt werden, sodass die Glasscheibe abgekühlt wird.

Bevorzugt ist mindestens ein Blaskasten oder auch beide Blaskästen überwiegend oder ausschließlich mit erfindungsgemäßen Düsenleisten ausgestattet.

Die Glasscheibe wird bevorzugt auf Rollen, Schienen oder einem Laufband zwischen die Blaskästen transportiert. In einer vorteilhaften Ausführung ist die Glasscheibe dabei auf einer Form mit einer rahmenartigen Auflagefläche (Rahmenform) angeordnet.

Bevorzugt werden die Blaskästen einander angenähert, nachdem die Glasscheibe zwischen ihnen angeordnet worden ist. So wird der Abstand der Düsenöffnungen zur Scheibenoberfläche verkürzt und die Vorspanneffizienz erhöht.

Das Beaufschlagen der Scheibenoberflächen mit dem Gasstrom erfolgt, indem ein Gasstrom in den inneren Hohlraum jedes Blaskastens eingeleitet wird, dort aufgeteilt und über die Düsenöffnungen gleichmäßig verteilt auf die Scheibenoberflächen geleitet wird.

Das zur Kühlung der Glasscheibe verwendete Gas ist bevorzugt Luft. Die Luft kann zur Erhöhung der Vorspanneffizienz innerhalb der Vorspannvorrichtung aktiv gekühlt werden. Typischerweise wird aber Luft verwendet, welche nicht durch aktive Maßnahmen speziell temperiert ist.

Die Scheibenoberflächen werden bevorzugt über einen Zeitraum von 1 s bis 10 s mit dem Gasstrom beaufschlagt.

Die vorzuspannende Glasscheibe besteht in einer bevorzugten Ausführung aus Kalk-Natron-Glas, wie es für Fensterscheiben üblich ist. Die Glasscheibe kann aber auch andere Glassorten wie Borsilikatglas oder Quarzglas enthalten oder daraus bestehen. Die Dicke der Glasscheibe beträgt typischerweise von 0,2 mm bis 10 mm, bevorzugt 0,5 mm bis 5 mm.

Das erfindungsgemäße Verfahren schließt sich in einer vorteilhaften Ausführung unmittelbar an einen Biegeprozess an, in dem die im Ausgangszustand plane Glasscheibe gebogen wird. Während des Biegeprozesses wird die Glasscheibe bis auf Erweichungstemperatur erhitzt. Der Vorspannprozess schließt sich an den Biegeprozess an, bevor die Glasscheibe signifikant abgekühlt ist. So muss die Glasscheibe zum Vorspannen nicht noch einmal eigens erhitzt werden.

Gebogene, vorgespannte Scheiben sind insbesondere im Fahrzeugbereich üblich. Die erfindungsgemäß vorzuspannende Glasscheibe ist daher bevorzugt als Fensterscheibe eines Fahrzeugs, besonders bevorzugt eines Kraftfahrzeugs und insbesondere eines Personenkraftwagens vorgesehen.

Die erfindungsgemäße Düsenleiste eröffnet zusätzliche Abflusskanäle für auf die Scheibenoberfläche geströmte Luft durch die Bereiche zwischen den zinnenartigen Erhebungen. Dieser Vorteil kommt insbesondere zum Tragen beim Vorspannen von Glasscheiben, die in der Richtung senkrecht zur Erstreckungsrichtung der Düsenleisten stark gekrümmt sind, sodass die Düsenleisten potentiell Barrieren für abfließende Lust darstellen können. Dies tritt insbesondere bei stark in zwei Raumrichtungen gebogenen Scheiben auf (sogenannte dreidimensionale oder sphärische Biegung) mit hoher Biegungstiefe. Solche stark gebogenen Scheiben bilden eine Art Kessel, sodass Gas weniger gut abfließen kann, insbesondere bei Verwendung von herkömmlichen quaderförmigen Düsenleisten, die zusätzliche Barrieren für abfließendes Gas darstellen. Das Verfahren wird daher in einer besonders vorteilhaften Ausführung auf eine solche stark gebogene Glasscheibe angewandt, wobei zumindest derjenige Blaskasten, der auf die konkave Scheibenoberfläche gerichtet ist, mit den erfindungsgemäßen Düsenleisten ausgestattet ist. Die Glasscheibe weist bevorzugt in der Krümmungsrichtung senkrecht zur Erstreckungsrichtung der Düsenleisten einen Biegungsgradienten BG von mindestens 5 auf, bevorzugt mindestens 8, besonders bevorzugt mindestens 10. Der Biegungsgradient ist dabei definiert als $BG = \frac{100 \times KT}{0,5 \times SL}$, wobei SL für die sogenannte Sehnenlänge, nämlich die Länge der Strecke zwischen den Mittelpunkten der Seitenkanten in der betrachteten Richtung steht und KT für die Krümmungstiefe, nämlich den lotrechten Abstand der geometrischen Scheibenmitte von besagter Strecke. Die Ausdrücke Sehnenlänge und Krümmungstiefe sind dem Fachmann geläufig. Es hat sich gezeigt, dass ab dem genannten Biegungsgradienten ein signifikanter Kesseleffekt auftritt und die Erfindung ihre Vorteile in besonderer Weise zeigt. Da Düsenleisten in der Regel parallel zu der Ober- und Unterkante der Glasscheibe angeordnet sind, was üblicherweise die längere Ausdehnungsdimension der Scheibe ist, gilt die vorstehend beschriebene Mindestkrümmung bevorzugt für die vertikale Krümmungsrichtung, das heißt die Krümmungsrichtung zwischen Oberkante und Unterkante. Oberkante ist diejenige Seitenkante der Scheibe, die dafür vorgesehen ist, in Einbaulage nach oben zum Fahrzeugdach zu weisen, während die Unterkante nach unten weist. Ein alternativer Biegegradient kann auch als $BG' = \frac{100 \times KT}{SL}$ definiert werden.

Glasscheiben müssen eine Mindestdicke aufweisen, um thermisch vorgespannt zu werden, weil die Differenz der Abkühlgeschwindigkeiten zwischen den Scheibenoberflächen und dem Scheibenkern entscheidend ist für die Ausbildung des charakteristischen Profils von Druckund Zugspannungen. Mit herkömmlichen Blaskästen können Scheiben ab einer Mindestdicke von etwa 3mm thermisch vorgespannt werden. Die verbesserte Vorspanneffizienz durch die erfindungsgemäßen Düsenleisten kann die Bemühungen unterstützen, auch dünnere Scheiben thermisch vorzuspannen. So können mit dem Verfahren auch Glasscheiben mit einer Dicke von kleiner als 3mm vorgespannt werden.

Die Düsenleiste kann insbesondere bei geringen Abständen an die Scheibengeometrie angepasst werden, indem störende Düsen gekürzt werden. So kann die Düsenleiste beispielsweise in einem Teststand in den gewünschten Abstand zu einer Glasscheibe bewegt werden und zinnenartige Erhebungen, die mit der Glasscheibe oder der diese tragenden Trägerform kollidieren, durch Materialabtrag gekürzt werden, um die Kollision zu vermeiden.

Gezeigt, aber in den Patentansprüchen nicht beansprucht ist, außerdem die Verwendung einer mit dem Verfahren vorgespannten Glasscheibe in Fortbewegungsmitteln für den Verkehr auf dem Lande, in der Luft oder zu Wasser, bevorzugt als Fensterscheibe in Schienenfahrzeugen oder Kraftfahrzeugen, insbesondere als Heckscheibe, Seitenscheibe oder Dachscheibe von Personenkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:

Fig. 1 eine perspektivische Ansicht einer Düsenleiste,

Fig. 2 einen Querschnitt durch die Düsenleiste gemäß Figur 1,

Fig. 3 einen Querschnitt durch zwei Blaskästen als Teil einer erfindungsgemäßen Vorrichtung zum thermischen Vorspannen,

Fig. 4 einen weiteren Querschnitt durch die Vorrichtung aus Figur 3, um 90° gedreht,

Fig. 5 eine Draufsicht auf die Düsenleisten eines Blaskastens,

Fig. 6 ein Flussdiagramm einer Ausführungsform des erfindungsgemäßen Verfahrens,

Fig. 7 eine Seitenansicht einer Ausgestaltung der erfindungsgemäßen Düsenleiste und

Fig. 8 eine Veranschaulichung des Biegegradienten BG.

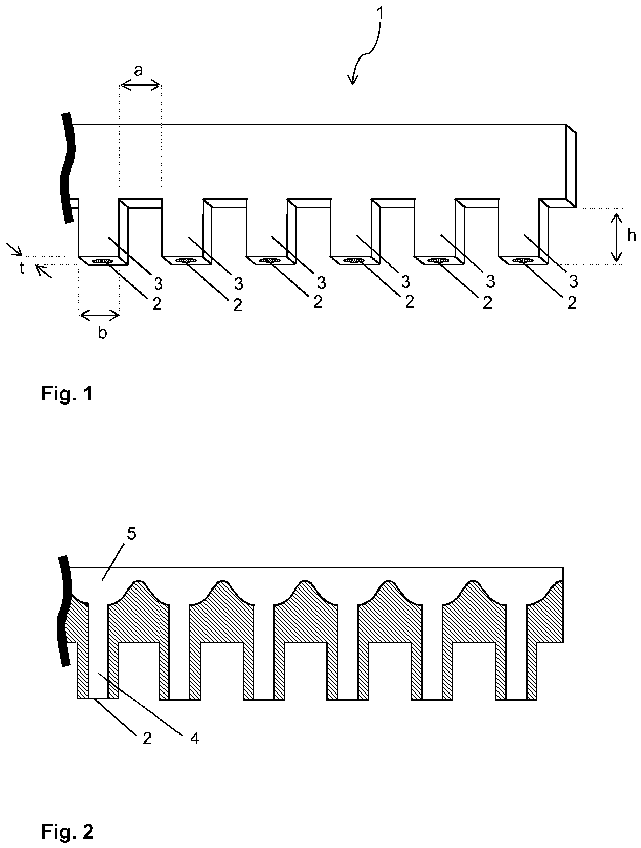

Figur 1 und Figur 2 zeigen je ein Detail einer Ausgestaltung der Düsenleiste 1 für einen Blaskasten zum thermischen Vorspannen von Glasscheiben. Die Düsenleiste 1 besteht aus Aluminium, das sich gut verarbeiten lässt und ein vorteilhaft geringes Gewicht hat. Die Düsenleiste weist beispielsweise eine Breite von 11 mm auf, wobei die Dimensionen darauf abgestimmt sind, die Gaskanäle eines zugehörigen Blaskastens abzuschließen. Wie bei gattungsgemäßen Düsenleisten üblich, ist die erfindungsgemäße Düsenleiste 1 mit einer Reihe von Düsen 4 ausgebildet. Jede Düse 4 ist eine Durchführung (Bohrung) zwischen zwei gegenüberliegenden Seitenflächen der Düsenleiste 1. Die Düsen 4 sind dafür vorgesehen, einen Gasstrom aus dem zugehörigen Blaskasten hinaus zu leiten, wobei der Gasstrom über einen Düseneintritt 5 in die Düse 4 eintritt und über eine Düsenöffnung 2 aus der Düse 4 austritt. Die Seitenfläche der Düsenleiste 1 mit den Düseneintritten 5 muss in Einbaulage folglich dem Blaskasten zugewandt sein, während die Seitenfläche mit den Düsenöffnungen 2 vom Blaskasten abgewandt ist.

Erfindungsgemäß ist die Seitenkante der Düsenleiste 1, auf der die Düsenöffnungen 2 angeordnet sind, mit zinnenartigen Erhebungen 3 ausgebildet, wobei jede Düsenöffnung 2 auf jeweils einer solchen Erhebung 3 angeordnet ist. Der Vorteil dieser Anordnung liegt darin, dass durch die Bereiche zwischen benachbarten Zinnen (den "Zinnenfenstern") Abflusskanäle ausgebildet werden. Durch diese Abflusskanäle kann Gas, das zum thermischen Vorspannen auf die Oberfläche einer Glasscheibe geleitet wurde, besser und schneller abfließen, wodurch der Wärmetransport beschleunigt wird. Die Abkühlung der Glasoberfläche erfolgt schneller, sodass die Vorspanneffizienz erhöht wird. Diese erhöhte Vorspanneffizienz kann ihrerseits auf zwei verschiedene Arten ausgenutzt werden:

- vorgegebene Spannungswerte können mit geringeren Gasströmen erreicht werden, sodass der Vorspannprozess mit geringerem Energieverbrauch durchgeführt werden kann.
- mit einem gegebenen Gasstrom können höhere Spannungswerte in der Glasscheibe realisiert werden und es können insbesondere auch dünnere Glasscheiben thermisch vorgespannt werden.

Diese Vorteile treten insbesondere zu Tage bei stark in zwei Raumrichtungen gebogenen Scheiben (dreidimensional gebogen, sphärisch gebogen), bei denen der Gasabfluss aufgrund ihrer Kesselform gehindert ist.

Die übrigen Seitenflächen der Düsenleiste 1 sind glatt-flächig ausgebildet.

Die geometrischen Abmessungen des Ausführungsbeispiels sind im Folgenden zusammengefasst.

Sie sind aber lediglich beispielhaft zu verstehen und sollen die Erfindung in keiner Weise einschränken.

Die zinnenartigen Erhebungen 3 haben eine Breite b von 15 mm, eine Höhe h von 40 mm und eine Tiefe t von 11 cm, wobei die Tiefe t im Wesentlichen der Breite der Düsenleiste 1 entspricht. Der Abstand a benachbarter Erhebungen 3 beträgt 15 mm. Der Abstand der Mittelpunkte benachbarter Düsenöffnungen 2 beträgt 30 mm.

Die einzelnen Düsen weisen einen stark verbreiterten Düseneintritt 5 auf, an den sich ein sich verjüngender Abschnitt anschließt. Danach bleibt der Durchmesser der Düse konstant bei 6 mm bis zur Düsenöffnung 2.

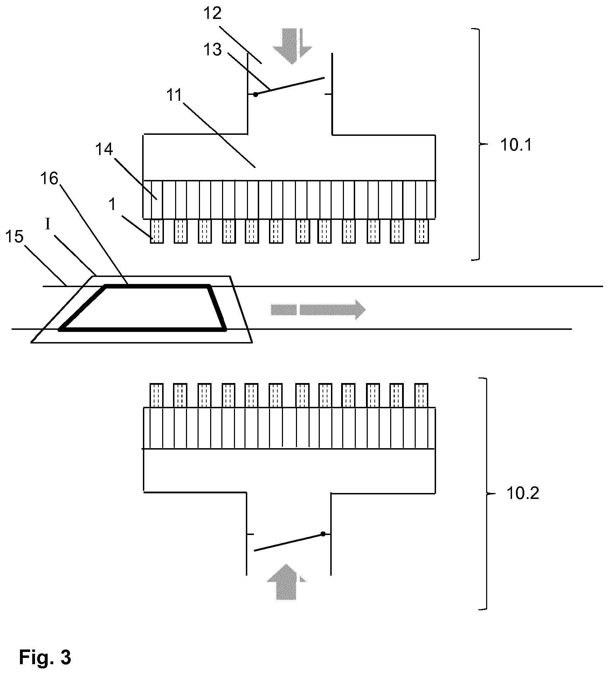

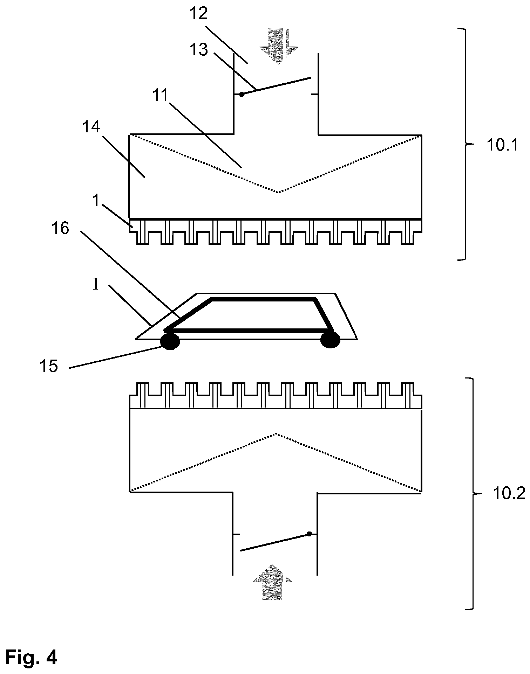

Figur 3 und Figur 4 zeigen eine Ausgestaltung der Vorrichtung zum thermischen Vorspannen von Glasscheiben. Die Vorrichtung umfasst einen ersten, oberen Blaskasten 10.1 und einen zweiten, unteren Blaskasten 10.2, die so einander gegenüberliegend angeordnet sind, dass die Düsenöffnungen 2 aufeinander gerichtet sind. Die Vorrichtung umfasst weiter ein Transportsystem 15, mit dem eine vorzuspannende Glasscheibe I zwischen die Blaskästen 10.1 und 10.2 transportiert werden kann. Die Glasscheibe I ist dabei horizontal gelagert auf einer Rahmenform 16, welche eine rahmenartige Auflagefläche aufweist, auf der ein umlaufender Randbereich der Glasscheibe I aufgelegt ist. Die eigentliche Transportvorrichtung 15 besteht beispielsweise aus Schienen oder einem Rollensystem, auf dem die Rahmenform 16 beweglich gelagert ist. Die Glasscheibe I ist beispielsweise eine Scheibe aus Kalk-Natron-Glas, die als Heckscheibe für einen Personenkraftwagen vorgesehen ist. Die Glasscheibe I hat einen Biegeprozess durchlaufen, wobei sie bei einer Temperatur von etwa 650 °C beispielsweise mittels Schwerkraftbiegen oder Pressbiegen in die vorgesehene, gebogene Form gebracht worden ist. Das Transportsystem 15 dient dazu, die Glasscheibe I im noch erhitzten Zustand von der Biegevorrichtung zur Vorspannvorrichtung zu transportieren. Dort werden die beiden Hauptflächen durch die Blaskästen 10.1 und 10.2 mit einem Luftstrom beaufschlagt, um sie stark abzukühlen und so ein charakteristisches Profil mechanischer Zug- und Druckspannungen zu erzeugen. Die thermisch vorgespannte Glasscheibe I ist dann als sogenanntes Einscheibensicherheitsglas für den Einsatz als Automobil-Heckscheibe geeignet. Nach dem Vorspannen wird die Scheibe durch das Transportsystem 15 wieder aus dem Zwischenraum zwischen den Blaskästen 10.1 und 10.2 transportiert, wodurch die Vorspannvorrichtung für das Vorspannen der nächsten Glasscheibe zur Verfügung steht. Die Vorrichtung weist außerdem Mittel auf zur Bewegung der Blaskästen 10.1 und 10.2 aufeinander zu und voneinander weg. Sobald die Glasscheibe I ihre vorgesehene Position zwischen den Blaskästen 10.1 und 10.2 erreicht hat, wird der Abstand der Blaskästen 10.1 und 10.2 zueinander und zu den Scheibenoberflächen verringert, um durch den Luftstrom eine stärkere Abkühlwirkung zu erzielen.

Nach erfolgtem Vorspannen wird der Abstand wieder vergrößert, um die Glasscheibe I ohne Beschädigung ihrer selbst oder der Düsenleisten 1 abtransportieren zu können. Die Transportrichtung der Glasscheibe I ist in Figur 3 durch einen grauen Pfeil dargestellt.

Die Blaskästen 10.1 und 10.2 sind Blaskästen der Art, wie sie beispielsweise in DE 3924402 C1 oder WO 2016054482 A1 beschrieben sind. Sie weisen einen inneren Hohlraum 11 auf, dem über eine Gaszuleitung 12 ein Luftstrom zugeleitet wird, der in den Figuren durch einen grauen Pfeil dargestellt ist. Der Luftstrom wird beispielsweise durch zwei nicht dargestellte, in Reihe geschaltete Ventilatoren erzeugt, die über die Gaszuleitung 12 mit dem Blaskasten 10.1 beziehungsweise 10.2 verbunden sind. Durch eine Verschlussklappe 13 kann der Luftstrom unterbrochen werden, ohne die Ventilatoren abschalten zu müssen.

Gegenüberliegend der Gaszuleitung 12 schließen sich an den Hohlraum 11 Kanäle 14 an, durch die der Luftstrom in eine Reihe von Teilströmen aufgeteilt wird. Die Kanäle 14 sind in der Art einer hohlen Rippe ausgebildet, die in einer Dimension im Wesentlichen so lang ist wie der Hohlraum 11 und in der dazu senkrechten Dimension eine deutlich geringe Breite aufweisen, beispielsweise etwa 11 mm. Die Kanäle 14 mit ihrem länglichen Querschnitt sind parallel zueinander angeordnet, sodass die Endpunkte aller Kanäle im Wesentlichen auf einer Gerade liegen, die senkrecht zur Erstreckungsrichtung der länglichen Kanäle verläuft. Die dargestellte Anzahl der Kanäle 14 ist nicht repräsentativ und dient lediglich zur Veranschaulichung des Wirkungsprinzips.

Der Hohlraum 11 ist keilartig ausgebildet - entlang einer ersten Dimension ist die Tiefe des Hohlraums 11 in der Mitte des Blaskastens am größten und nimmt in beide Richtungen nach außen hin ab. In der zweiten, dazu senkrechten Dimension bleibt die Tiefe bei einer gegebenen Position der ersten Dimension jeweils konstant. Die Kanäle 14 sind entlang der besagten ersten Dimension an den keilförmigen Hohlraum 11 angeschlossen. Sie weisen daher ein zur Keilform des Hohlraums 11 komplementäres Tiefenprofil auf, wobei die Tiefe in der Mitte des Kanals 14 am geringsten ist und nach außen hin zunimmt, sodass der Luftaustritt jedes Kanals 14 in eine glatte, typischerweise aber gekrümmte Fläche ausbildet. Die Luftaustritte aller Kanäle 14 bilden eine gemeinsame glatte Fläche aus.

Figur 3 und Figur 4 zeigen zwei Querschnitte mit einem Winkel von 90° zueinander. Figur 3 zeigt den Querschnitt entlang der besagten zweiten Dimension des Blaskastens 10.1, 10.2 quer zur Ausrichtung der Kanäle 14, sodass die einzelnen Kanäle 14 im Schnitt zu erkennen sind. In der Schnittebene ist die Tiefe des Hohlraums 11 konstant. Figur 4 zeigt den Querschnitt entlang der besagten ersten Dimension des Blaskastens 10.1, 10.2 entlang der Ausrichtung der Kanäle 14. Hier ist das keilartige Tiefenprofil des Hohlraums 11 zu erkennen, während in der Schnittebene nur ein einzelner Kanal 14 liegt, dessen Tiefenprofil ebenfalls zu erkennen ist.

Jeder Kanal 14 ist an seinem dem Hohlraum gegenüberliegenden Ende mit einer Düsenleiste 1 abgeschlossen. Durch die Düsenleiste 1 wird der Luftstrom jedes Kanals 14 wieder aufgeteilt in weitere Teilströme, die jeweils durch eine Düse 4 geleitet werden. Jeder Teilstrom tritt durch den Düseneintritt 5 aus dem Kanal 14 in die Düse 4 ein, aus der Düsenöffnung 2 aus der Düse 4 aus und trifft dann auf die Oberfläche der Glasscheibe I.

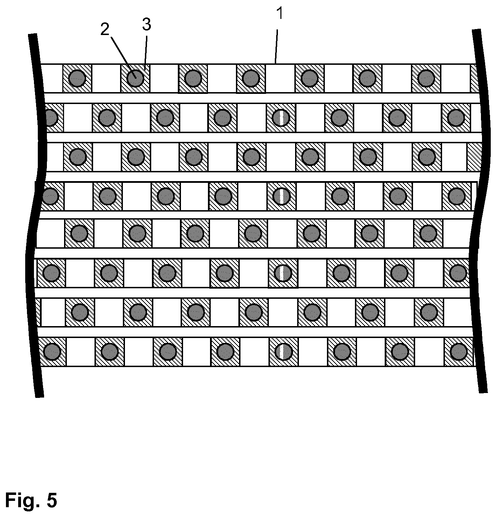

Figur 5 zeigt einen Ausschnitt einer Draufsicht auf die Düsenöffnungen 2 eines Blaskastens 10.1, 10.2. Die Anzahl der Düsenleisten 1 ist wieder nicht repräsentativ und dient lediglich zur Veranschaulichung. Es ist zu erkennen, dass die benachbarte Düsenleisten 1 versetzt zueinander angeordnet sind, sodass eine zinnenartige Erhebung 3 einer Düsenleiste 1 jeweils benachbart angeordnet ist zu einem "Zinnenfenster" der beiden benachbarten Düsenleisten 1. Durch diese Anordnung wird eine möglichst gleichmäßige Verteilung der Düsenöffnungen 2 erreicht.

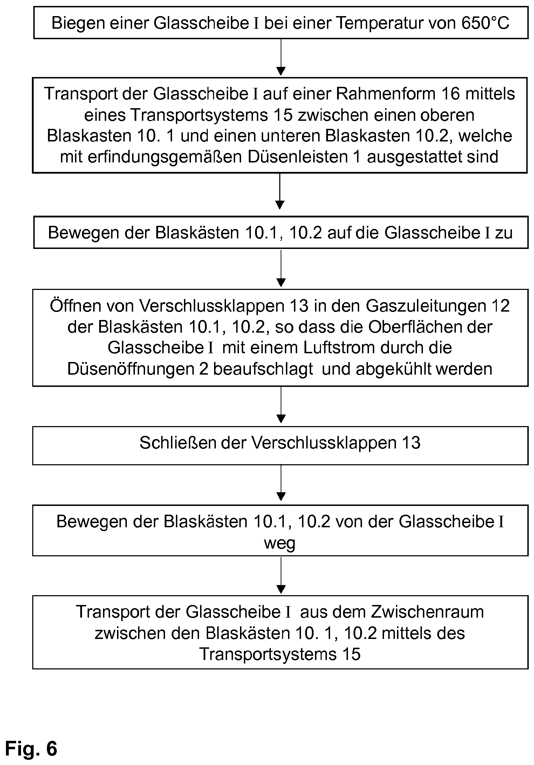

Figur 6 zeigt ein Ausführungsbeispiel des Verfahrens zum thermischen Vorspannen von Glasscheiben anhand eines Flussdiagramms.

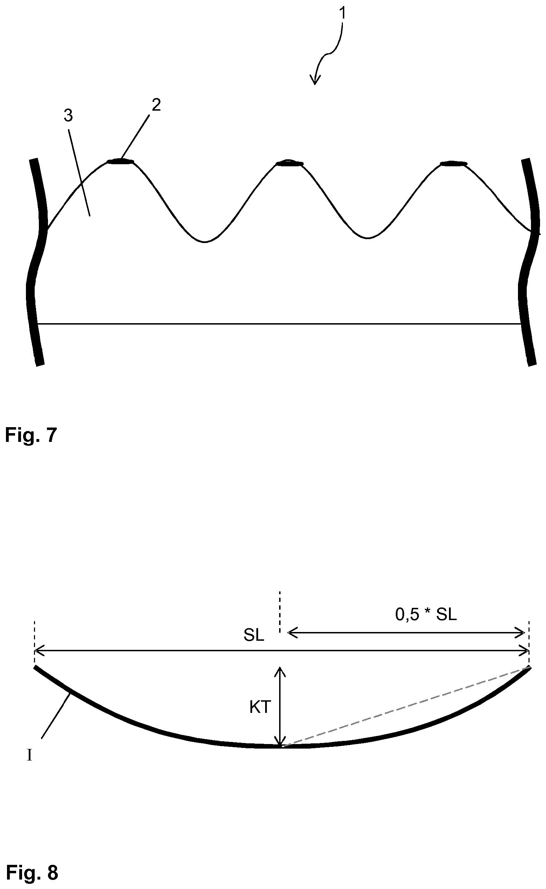

Figur 7 zeigt eine Ausgestaltung der erfindungsgemäßen Düsenleiste 1. Die zinnenartigen Erhebungen 3 sind hier nicht quaderförmig ausgebildet. Stattdessen ist die Fläche der Düsenleiste 1 mit den Düsenöffnungen 2 gekrümmt ausgebildet. In der dargestellten Seitenansicht der Düsenleiste (also der Draufsicht auf die Fläche, die die Fläche mit den Düsenöffnungen 2 mit der gegenüberliegenden Fläche verbindet und entlang der Längendimension der Düsenleiste 1 angeordnet ist) ergibt sich ein Wellenprofil mit konvexen Wellenbergen und konkaven Wellentälern. Die Düsenöffnungen 2 sind auf den Wellenkämmen angeordnet. Da die Fläche mit den Düsenöffnungen 2 keine planen Abschnitte aufweist, bilden sich keine Kanten zwischen den zinnenartigen Erhebungen 3 aus, in denen sich Glassplitter verhaken könnten. Nach Glasbruch ist diese Düsenleiste 1 daher einfacher zu reinigen.

Figur 8 veranschaulicht den Biegegradienten BG anhand eines schematischen Querschnitts durch eine Glasscheibe I. Der Biegegradient BG beschreibt das Ausmaß der Biegung der Glasscheibe. Der Biegungsgradient ist definiert als $BG = \frac{100 \times KT}{0,5 \times SL}$. Die Sehnenlänge SL kennzeichnet die Länge der Strecke zwischen den Mittelpunkten der Seitenkanten in der betrachteten Richtung. Die Krümmungstiefe $KT$ kennzeichnet den lotrechten Abstand der geometrischen Scheibenmitte von besagter Strecke. Der Biegegradient BG gibt letztendlich die Steigung einer geraden durch die geometrische Scheibenmitte und dem Mittelpunkt der Seitenkante an, die in der Figur durch eine gestrichelte Linie gekennzeichnet ist. Je größer der Biegegradient BG, desto kesselartiger ist die Glasscheibe I ausgebildet und desto vorteilhafter tritt der Effekt der vorliegenden Erfindung, nämlich die verbesserte Effizienz durch die Bereitstellung zusätzlicher Luftabflusskanäle, zutage.

Beispiel

Es wurden Heckscheiben mit einem vertikalen Biegungsgradienten größer 8 und einem horizontalen Biegungsgradienten von größer 4 mit einem erfindungsgemäßen Blaskasten und einem herkömmlichen Blaskasten mit quaderförmigen Düsenleisten vorgespannt. Bei gleichen Abständen der Glasscheibe zu den Blaskästen wurde die Drehzahl der Ventilatoren und damit Strömungsgeschwindigkeit des Luftstroms so geregelt, dass mit der erfindungsgemäßen Düsenleiste das gleiche Bruchbild erzeugt wurde wie mit der herkömmlichen. Das Bruchbild wird durch Anzahl und Größe der Fragmente bei Bruch der Glasscheibe charakterisiert und ist ein Maß für den erreichten Grad der Vorspannung. Es hat sich herausgestellt, dass die erfindungsgemäße Düsenleiste eine Energieersparnis größer 5% ermöglichte. Dieses Ergebnis war für den Fachmann unerwartet und überraschend.

Bezugszeichenliste:

(1)      Düsenleiste

(2)      Düsenöffnung / Austrittsöffnung der Düse 4
(3)      zinnenartige Erhebung der Düsenleiste 1
(4)      Düse
(5)      Düseneintritt / Eintrittsöffnung der Düse 4

(10.1)   erster / oberer Blaskasten
(10.2)   zweiter / unterer Blaskasten
(11)     Hohlraum des Blaskastens 10
(12)     Gaszuleitung des Blaskastens 10
(13)     Verschlussklappe in der Gaszuleitung 12
(14)     Kanal / Düsensteg des Blaskastens 10
(15)     Transportsystem für Glasscheiben
(16)     Rahmenform für Glasscheiben

(b)      Breite der zinnenartigen Erhebung 3
(h)      Höhe der zinnenartigen Erhebung 3
(t)      Tiefe der zinnenartigen Erhebung 3
(a)      Abstand benachbarter Erhebungen 3

(I)      Glasscheibe

SL       Sehnenlänge
KT       Krümmungstiefe

**Patentansprüche**

1.  Düsenleiste (1) für einen Blaskasten zum thermischen Vorspannen von Glasscheiben, die eine Reihe von Düsen (4) aufweist mit jeweils einem Düseneintritt (5) und einer Düsenöffnung (2) zum Beaufschlagen einer Oberfläche einer Glasscheibe (I) mit einem Luftstrom durch die Düsenöffnungen (2), wobei die Düsenöffnungen (2) auf zinnenartigen Erhebungen (3) einer Seitenfläche der Düsenleiste (1) angeordnet sind, welche einstückig mit der Düsenleiste (1) ausgebildet sind, wobei die zinnenartigen Erhebungen (3) zumindest bereichsweise gekrümmt ausgebildet sind, sodass die Seitenfläche der Düsenleiste (1) mit den zinnenartigen Erhebungen (3) keine planen Abschnitte aufweist, sodass sich in der Seitenansicht ein Wellenprofil ergibt, bei dem die Düsenöffnungen (2) auf den Wellenbergen angeordnet sind.

2. Düsenleiste nach Anspruch 1, wobei die Düsenöffnungen (2) mit einem gegenseitigen Abstand von 10 mm bis 50 mm angeordnet sind.

3. Düsenleiste nach Anspruch 1 oder 2, wobei die Düsenöffnungen (2) einen Durchmesser von 4 mm bis 15 mm aufweisen, bevorzugt von 5 mm bis 10 mm.

4. Düsenleiste nach einem der Ansprüche 1 bis 3, wobei die Höhe (h) der Erhebungen (3) von 10 mm bis 150 mm beträgt, bevorzugt von 30 mm bis 100 mm.

5. Düsenleiste nach einem der Ansprüche 1 bis 4, wobei die Breite (b) der Erhebungen (3) mindestens dem Durchmesser der Düsenöffnungen (2) zuzüglich 3 mm entspricht.

6. Düsenleiste nach einem der Ansprüche 1 bis 5, wobei der Abstand (a) benachbarter Erhebungen (3) mindestens 5 mm beträgt, bevorzugt mindestens 10 mm.

7. Düsenleiste nach einem der Ansprüche 1 bis 6, wobei die Düsen (4) einen sich verjüngenden Abschnitt aufweisen in der Richtung vom Düseneintritt (5) zur Düsenöffnung (2).

8. Düsenleiste nach einem der Ansprüche 1 bis 7, wobei die Düsenleiste (1) Aluminium oder Stahl enthält.

9. Blaskasten (10.1, 10.2) zum thermischen Vorspannen von Glasscheiben, umfassend einen Hohlraum (11), eine an den Hohlraum (11) angeschlossene Gaszuleitung (12) und einer Reihe von an den Hohlraum (11) angeschlossenen Kanälen (14), wobei mindestens ein Kanal (14) dem Hohlraum (11) gegenüberliegend mit einer Düsenleiste (1) nach einem der Ansprüche 1 bis 8 abgeschlossen ist.

10. Vorrichtung zum thermischen Vorspannen von Glasscheiben, umfassend

- einen ersten Blaskasten (10.1) und einen zweiten Blaskasten (10.2), die einander gegenüberliegend angeordnet sind, sodass die Düsenöffnungen des ersten Blaskastens (10.1) und des zweiten Blaskastens (10.2) aufeinander weisen, wobei der erste Blaskasten (10.1) und/oder der zweite Blaskasten (10.2) mit mindestens einer Düsenleiste (1) nach einem der Ansprüche 1 bis 8 ausgestattet ist; und
- Mittel zur Bewegung einer Glasscheibe (I) in einen Zwischenraum zwischen dem ersten Blaskasten (10.1) und dem zweiten Blaskasten (10.2).

**Claims**

1. Nozzle strip (1) for a blow box for thermally prestressing glass panes, which nozzle strip has a row of nozzles (4) each having a nozzle inlet (5) and a nozzle opening (2) for impinging on a surface of a glass pane (I) with a stream of air through the nozzle openings (2), wherein the nozzle openings (2) are arranged on merlon-like elevations (3) of a side surface of the nozzle strip (1), which are implemented integrally with the nozzle strip (1), wherein the merlon-like elevations (3) are curved at least in regions such that the side surface of the nozzle strip (1) with the merlon-like elevations (3) has no planar sections, yielding a wave-like profile when viewed from the side, wherein the nozzle openings (2) are arranged on the wave peaks.

2. Nozzle strip according to claim 1, wherein the nozzle openings (2) are arranged at a mutual distance of 10 mm to 50 mm.

3. Nozzle strip according to claim 1 or 2, wherein the nozzle openings (2) have a diameter of 4 mm to 15 mm, preferably of 5 mm to 10 mm.

4. Nozzle strip according to one of claims 1 through 3, wherein the height (h) of the elevations (3) is from 10 mm to 150 mm, preferably from 30 mm to 100 mm.

5. Nozzle strip according to one of claims 1 through 4, wherein the width (b) of the elevations (3) corresponds at least to the diameter of the nozzle openings (2) plus 3 mm.

6. Nozzle strip according to one of claims 1 through 5, wherein the distance (a) between adjacent elevations (3) is at least 5 mm, preferably at least 10 mm.

7. Nozzle strip according to one of claims 1 through 6, wherein the nozzles (4) have a section tapered in the direction from the nozzle inlet (5) to the nozzle opening (2).

**8.** Nozzle strip according to one of claims 1 through 7, wherein the nozzle strip (1) contains aluminum or steel.

**9.** Blow box (10.1, 10.2) for thermally prestressing glass panes, comprising a hollow space (11), a gas feed line (12) connected to the hollow space (11), and a row of channels (14) connected to the hollow space (11), wherein at least one channel (14) opposite the hollow space (11) is completed with a nozzle strip (1) according to one of claims 1 through 8.

**10.** Apparatus for thermally prestressing glass panes, comprising

- a first blow box (10.1) and a second blow box (10.2) that are arranged opposite one another such that the nozzle openings of the first blow box (10.1) and of the second blow box (10.2) face one another, wherein the first blow box (10.1) and/or the second blow box (10.2) is equipped with at least one nozzle strip (1) according to one of claims 1 through 8; and
- means for moving a glass pane (I) into an intermediate space between the first blow box (10.1) and the second blow box (10.2).

**Revendications**

**1.** Bande de buses (1) pour une soufflerie destinée à la précontrainte thermique de vitres, laquelle bande de buses comporte une rangée de buses (4) présentant chacune une entrée de buse (5) et une ouverture de buse (2) pour projeter un flux d'air à travers les ouvertures de buse (2) sur une surface d'une vitre (I), dans laquelle les ouvertures de buse (2) sont disposées sur des élévations en forme de merlons (3) d'une surface latérale de la bande de buses (1), qui sont réalisées d'un seul tenant avec la bande de buses (1), dans laquelle les élévations en forme de merlons (3) sont courbées au moins dans certaines zones de telle sorte que la surface latérale de la bande de buses (1) avec les élévations en forme de merlons (3) ne présente aucune section plane, ce qui donne un profil ondulé lorsqu'on la regarde de côté, dans laquelle les ouvertures de buses (2) sont disposées sur les crêtes des ondulations.

**2.** Bande de buses selon la revendication 1, dans laquelle les ouvertures de buses (2) sont disposées à une distance mutuelle de 10 mm à 50 mm.

**3.** Bande de buses selon la revendication 1 ou 2, dans laquelle les ouvertures de buses (2) ont un diamètre de 4 mm à 15 mm, de préférence de 5 mm à 10 mm.

**4.** Bande de buses selon l'une des revendications 1 à 3, dans laquelle la hauteur (h) des élévations (3) est comprise entre 10 mm et 150 mm, de préférence entre 30 mm et 100 mm.

**5.** Bande de buses selon l'une des revendications 1 à 4, dans laquelle la largeur (b) des élévations (3) correspond au moins au diamètre des ouvertures de buses (2) plus 3 mm.

**6.** Bande de buses selon l'une des revendications 1 à 5, dans laquelle la distance (a) entre des élévations adjacentes (3) est d'au moins 5 mm, de préférence d'au moins 10 mm.

**7.** Bande de buses selon l'une des revendications 1 à 6, dans laquelle les buses (4) ont une section effilée dans la direction allant de l'entrée de buse (5) à l'ouverture de buse (2).

**8.** Bande de buses selon l'une des revendications 1 à 7, dans laquelle la bande de buses (1) contient de l'aluminium ou de l'acier.

**9.** Boîte de soufflage (10.1, 10.2) pour la précontrainte thermique de vitres, comprenant un espace creux (11), une conduite d'alimentation en gaz (12) reliée à l'espace creux (11), et une rangée de canaux (14) reliés à l'espace creux (11), dans laquelle au moins un canal (14) opposé à l'espace creux (11) est complété par une bande de buses (1) selon l'une des revendications 1 à 8.

**10.** Dispositif pour la précontrainte thermique de vitres, comprenant

- une première boîte de soufflage (10.1) et une deuxième boîte de soufflage (10.2) qui sont disposées l'une en face de l'autre de telle sorte que les ouvertures de buse de la première boîte de soufflage (10.1) et de la deuxième boîte de soufflage (10.2) se font face, dans lequel la première boîte de soufflage (10.1) et/ou la deuxième boîte de soufflage (10.2) est équipée d'au moins une bande de buses (1) selon l'une des revendications 1 à 8 ; et
- des moyens pour déplacer une vitre (I) dans un espace intermédiaire entre la première boîte de soufflage (10.1) et la deuxième boîte de soufflage (10.2).

**Fig. 1**

**Fig. 2**

**Fig. 3**

**Fig. 4**

Fig. 5

Biegen einer Glasscheibe I bei einer Temperatur von 650°C

↓

Transport der Glasscheibe I auf einer Rahmenform 16 mittels eines Transportsystems 15 zwischen einen oberen Blaskasten 10. 1 und einen unteren Blaskasten 10.2, welche mit erfindungsgemäßen Düsenleisten 1 ausgestattet sind

↓

Bewegen der Blaskästen 10.1, 10.2 auf die Glasscheibe I zu

↓

Öffnen von Verschlussklappen 13 in den Gaszuleitungen 12 der Blaskästen 10.1, 10.2, so dass die Oberflächen der Glasscheibe I mit einem Luftstrom durch die Düsenöffnungen 2 beaufschlagt und abgekühlt werden

↓

Schließen der Verschlussklappen 13

↓

Bewegen der Blaskästen 10.1, 10.2 von der Glasscheibe I weg

↓

Transport der Glasscheibe I aus dem Zwischenraum zwischen den Blaskästen 10. 1, 10.2 mittels des Transportsystems 15

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 710690 A
- DE 808880 B
- DE 1056333 A
- DE 3612720 C2
- DE 3924402 C1
- WO 2016054482 A1
- US 4519829 A
- US 4711655 A
- EP 0463971 A2
- GB 505188 A
- US 2013255319 A1
- US 4662926 A

- EP 0719242 B1
- EP 0002055 A1
- WO 03101898 A1
- JP 5445974 B
- US 4494972 A
- EP 2805926 A1
- DE 102008017729 A1
- US 2008127678 A1
- US 4749401 A
- JP 200927488 A
- US 2194760 A